# DEMANDE DE BREVET EUROPEEN

(11) **EP 4 379 743 A1**
(43) Date de publication de la demande: **05.06.2024**
(21) Numéro de dépôt: 23208632.2
(22) Date de dépôt: 08.11.2023
(51) Int. Cl.: G21C 17/06, G21C 17/08, G21C 3/334

(54) **PROCEDE D'AIDE A LA DETECTION DE CORPS MIGRANTS AU SEIN D'UN ASSEMBLAGE COMBUSTIBLE**

(30) Priorité: 29.11.2022 FR 2212506
(71) Demandeur: Electricité de France, 75008 Paris (FR)
(72) Inventeur: DORY, Fabien, 94230 CACHAN (FR)
(74) Mandataire: Regimbeau

(57) **Abrégé**

L'invention concerne un procédé d'aide à la détection de corps migrants au sein d'un assemblage combustible d'une centrale nucléaire et plus particulièrement sur la grille anti-débris de l'embout inférieur dudit assemblage, au cours duquel on pilote au moins une caméra en direction dudit assemblage et on dirige le flux d'images enregistré par ladite au moins une caméra vers une interface homme machine qui comprend au moins un écran permettant à un premier opérateur de visualiser ledit flux d'images vidéos, caractérisé en ce qu'il comprend une première étape de détection, à l'aide d'un algorithme de reconnaissance d'images, desdits corps migrants , ainsi qu'à minima une deuxième étape d'alerte dudit opérateur si ledit algorithme a détecté la présence potentielle d'au moins un corps migrant.

## Description

### DOMAINE TECHNIQUE GENERAL

La présente invention se situe dans le domaine de la détection des corps migrants au pied des assemblages combustibles au sein de centrales nucléaires.

Elle se situe plus précisément dans le contexte des inspections télévisuelles sous eau d'assemblages combustibles.

### CONTEXTE DE L'INVENTION ET ETAT DE LA TECHNIQUE

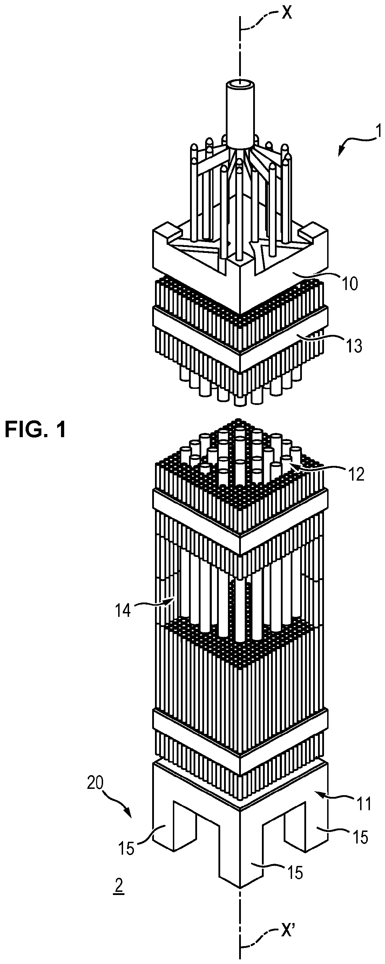

A la figure 1 annexée est représenté un assemblage combustible 1 parmi la pluralité d'assemblages constituant le coeur 2 d'un réacteur nucléaire.

Il comporte deux embouts supérieur 10 et inférieur 11 entre lesquels se trouvent la structure de l'assemblage (tubes guides 12 et grilles 13), ainsi que des crayons combustibles 14.

L'assemblage combustible 1 repose sur la plaque inférieure du coeur 2 par l'embout inférieur 11.

Lors de la mise en place de tels assemblages dans le coeur, il est nécessaire que leur positionnement dans leur emplacement respectif dédié 20 leur confère un maintien stable, dans une position verticale en référence à l'axe X-X' de la plus grande dimension de l'assemblage 1.

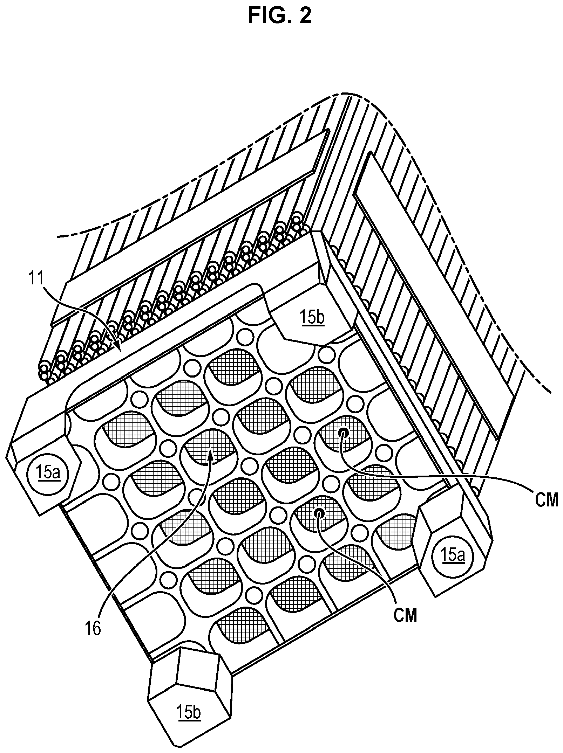

L'assemblage combustible repose sur la plaque inférieure de coeur 2 sur quatre points d'appui, lesquels constituent des pieds 15a et 15b visibles à la figure 2 annexée.

Les deux pieds 15b sont parfaitement plans, tandis que les deux autres sont munis d'un alésage permettant un bon positionnement de l'embout 11 lors de la mise en place de l'assemblage 1 en coeur.

La stabilité de l'assemblage est obtenue lorsque l'embout inférieur 11 de l'assemblage combustible 1 repose sur ces quatre pieds 15a et 15b, sans que ne s'interpose entre ces points d'appui 15a et 15b et le fond du coeur 2 un quelconque corps étranger ou une quelconque aspérité.

On notera qu'à la figure 2 est également visible la grille anti-débris 16 de l'embout inférieur 11 permettant de filtrer des corps étrangers afin d'éviter qu'ils ne remontent dans l'assemblage, entre les crayons combustibles.

Lors du stockage des assemblages combustibles 1, il peut arriver que des corps étrangers, également appelés corps migrants CM, se logent et se fixent sous les pieds 15a et 15b de l'embout inférieur 11. Ces corps doivent êtres extraits avant l'introduction des assemblages dans le réacteur. A défaut, ils pourraient en compromettre la stabilité.

Dans le document FR-A-3118270 au nom du présent déposant est décrite une installation de nettoyage qui permet de se débarrasser des corps migrants qui se seraient logés sous les pieds de l'embout inférieur.

Dans le contexte de la présente invention, on entend indifféremment par « corps étranger » ou « corps migrant » CM tout objet de toute matière. Ils peuvent avoir des origines variées que l'on retrouve classiquement dans tout site industriel et être endogènes ou exogènes à celui-ci.

De manière non limitative, il peut s'agir des débris issus d'opérations de soudage ou d'usinage. Il peut s'agir aussi de composants de petite taille tels que par exemple des vis, boulons, rondelles, ressorts, copeaux métalliques, etc., qui peuvent migrer et se fixer sur la grille anti-débris 16.

La figure 2 illustre un exemple de corps migrant CM arrêté par la grille anti-débris 16. Ces corps migrants CM viennent se loger sous ou sur la grille anti-débris 16 où ils sont bloqués selon les cas.

Dans une centrale nucléaire à eau pressurisée, le combustible nucléaire qui produit la chaleur est contenu dans des tubes en alliage de zirconium que l'on désigne par l'appellation crayons combustibles. Ces crayons combustibles sont regroupés en faisceaux de 264 crayons, maintenus ensemble par une ossature fermée par des embouts. Le tout, ossature + crayons, forme un « assemblage combustible ». Le coeur d'un réacteur d'une centrale nucléaire, est constitué de 157, 193 ou 205 (241 sur un EPR) de ces assemblages combustibles, notamment et non limitativement dans le cas les centrales nucléaires françaises telles que celles détenues par le présent déposant.

L'embout inférieur 11 d'un assemblage combustible 1 vient reposer sur la plaque inférieure du coeur 2, percée de trous pour permettre la circulation de l'eau de refroidissement, dans la direction verticale, de bas en haut. Cette eau de refroidissement, en circulant dans le circuit primaire, peut se charger de débris éventuellement présents, à savoir de corps migrants CM, comme expliqué plus haut.

Lors d'un arrêt d'une centrale nucléaire au cours duquel le coeur du réacteur nucléaire est déchargé, les assemblages sont extraits pour être inspectés sous eau, sous tous les angles, grâce à des caméras, à la recherche de différents défauts, puis retournent en coeur pour le cycle suivant ou sont mis en piscine de refroidissement. Lors de ces inspections télévisuelles (en abrégé ITV), on inspecte notamment attentivement la grille anti-débris 16 à la recherche de ces éventuels corps migrants CM.

Cette inspection est nécessaire car un corps migrant présent sur la grille 16 peut avoir plusieurs impacts si l'assemblage 1 est rechargé tel quel dans le coeur 2.

En effet, en bouchant une partie du filtre constitué par la grille anti-débris 16, il modifie la circulation de l'eau de refroidissement, peut induire des vibrations/turbulences et entraîner un phénomène de « fretting », c'est-à-dire de frottement des crayons 14 sur le squelette de l'assemblage 1, provoquant ainsi une usure prématurée de ce dernier.

Par ailleurs, si un corps migrant CM est encore présent sur la grille anti-débris 16 lors du rechargement, il peut éventuellement, lors des manipulations du rechargement, passer à travers la grille anti-débris et se retrouver entre des crayons 14.

S'il s'agit d'un corps métallique, il y a un risque de perçage de la gaine des crayons, de sorte que le coeur n'est plus propre.

De plus, lors du rechargement et notamment de l'arrivée de l'embout inférieur 11 de l'assemblage 1 sur la plaque inférieure de coeur 2, un corps migrant encore présent peut appliquer une déformation sur cet assemblage.

Les impacts potentiels sur les crayons14 peuvent les endommager, voire entraîner une rupture de la gaine qui constitue la première des trois barrières de sûreté qui empêche la dispersion des produits radioactifs contenus dans le combustible.

De plus, la déformation possible de l'assemblage 1 à cause d'un corps migrant CM lors du rechargement peut rendre difficile l'extraction future de cet assemblage du coeur 2.

Il est donc très important, lors des inspections télévisuelles (en abrégé ITV) de la grille anti-débris 16, qu'aucun corps migrant CM n'échappe à l'inspection des opérateurs dédiés à cette tâche.

Or, une telle mission d'inspection est difficile car elle demande une vigilance élevée de la part des opérateurs, sur une longue durée. Elle provoque une fatigue visuelle et attentionnelle importante, car elle met en oeuvre des actions très répétitives, monotones, au cours desquelles les événements à détecter sont très rares (de l'ordre d'un corps migrant CM pour cinquante assemblages inspectés, ce qui représente environ 2h30 de vidéo à visualiser).

La conséquence en est que des corps migrants CM ne sont parfois pas détectés par l'opérateur, et ce malgré le fait que dans le protocole actuel, chaque vidéo est inspectée individuellement par plusieurs opérateurs, successivement, selon l'organisation propre à la centrale.

Cette technique actuelle d'inspection télévisuelle est non assistée, de sorte le flux vidéo renvoyé par la caméra d'inspection est brut, un opérateur humain étant chargé de détecter les corps migrants CM à partir du flux vidéo.

Un exemple d'organisation d'inspection est décrit ci-après.

Dans un premier temps, un premier opérateur est chargé d'une inspection « en direct », pendant la prise d'images à l'aide d'une caméra en fond de piscine. L'opérateur fait amener l'assemblage combustible 1 au-dessus de la caméra, puis zoome sur les pieds 15 et la grille anti-débris 16 qu'il inspecte en détail (entre 2 et 3 minutes par assemblage).

Il note, sous la forme d'un rapport, les suspicions de corps migrants CM et transmet la vidéo brute (sans les informations de corps migrants détectés) à un second opérateur qui réexamine toute la vidéo à la recherche de corps migrants CM et génère également son rapport.

Enfin, le troisième opérateur réexamine la vidéo, assisté des deux rapports des deux opérateurs précédents, et prend une décision finale (présence ou non d'un corps migrant à extraire).

En pratique, il n'existe pas de formation spécifique sur ce sujet, de sorte que l'apprentissage des opérateurs se fait par le compagnonnage et par l'expérience des cas vécus.

Les documents JP2013160738, WO2021/026649 et CN109243638 illustrent l'arrière-plan technologique de l'invention.

La présente invention vise à fiabiliser l'opération décrite plus haut en palliant les défauts de vigilance des opérateurs, via une assistance à la détection de ces corps migrants.

### PRESENTATION DE L'INVENTION

Ainsi, la présente invention se rapporte à un procédé d'aide à la détection de corps migrants au sein d'un assemblage combustible d'une centrale nucléaire et plus particulièrement sur la grille anti-débris de l'embout inférieur dudit assemblage, au cours duquel on pilote au moins une caméra en direction dudit assemblage et on dirige le flux d'images enregistré par ladite au moins une caméra vers une interface homme machine qui comprend au moins un écran permettant à un premier opérateur de visualiser ledit flux d'images vidéos, caractérisé en ce qu'il comprend une première étape de détection, à l'aide d'un algorithme de reconnaissance d'images, desdits corps migrants, ainsi qu'à minima une deuxième étape d'alerte dudit opérateur si ledit algorithme a détecté la présence potentielle d'au moins un corps migrant.

Grâce à l'invention, on fournit en quelque sorte audit opérateur une « collègue virtuel » qui lui permet de lui indiquer les corps migrants qu'il détecte.

On comprend que cela facilite la tâche de l'opérateur, évite une perte de vigilance et contribue à ce qu'aucun corps migrant n'échappe à la surveillance.

Selon d'autres caractéristiques avantageuses et non limitatives de ce procédé, prises seules ou selon une combinaison techniquement compatible d'au moins deux d'entre elles :
- ladite deuxième étape d'alerte comprend le déclenchement d'une alerte sonore et/ou d'une alerte visuelle sur ledit écran, de l'endroit où est potentiellement placé ledit corps migrant et/ou la génération automatique d'un rapport d'inspection ;
- lorsque ledit algorithme a détecté la présence potentielle d'au moins un corps migrant, on stocke le fichier vidéo correspondant ainsi que le (les) fichier(s) de détection(s) effectuée(s) par ledit algorithme et on l'(les) adresse à un deuxième opérateur avec une indication temporelle, dans ledit fichier vidéo, de l'(ou des) instant(s) au(x)quel(s) un (des) corps migrant(s) a (ont) été potentiellement détecté(s), ce deuxième opérateur validant la présence ou le défaut de présence d'au moins un corps migrant ;
- ledit (lesdits) fichiers de détection sont transmis à un troisième opérateur qui valide, de manière définitive, la présence ou le défaut de présence d'au moins un corps migrant ;
- il comprend une étape d'apprentissage automatique de détection de corps migrants lorsque le deuxième opérateur, respectivement le troisième opérateur a validé le défaut de présence d'un corps migrant ;
- l'on fait usage d'un logiciel de reconnaissance d'image de type « réseau de neurones convolutionnel », qui est entraîné sur une base d'apprentissage constituée d'archives de vidéos de corps migrants, laquelle base est potentiellement enrichie à chaque fois que ledit logiciel de reconnaissance commet une erreur de détection tel un « faux positif » ou un « faux négatif », cette erreur ayant été validée par le deuxième et /ou le troisième opérateur ;
- ladite indication temporelle a la forme d'au moins une barre affichée sur la ligne de progression temporelle de la vidéo.

Dans l'ensemble de la présente demande, y compris les revendications, on entend respectivement par les expressions « faux positif » et un « faux négatif », la détection par le logiciel de quelque chose qui n'est pas un corps migrant, respectivement une absence de détection d'un réel corps migrant, non vu par le logiciel, alors qu'il est présent dans la vidéo.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
La figure 1 est une vue en perspective d'un assemblage combustible conforme à l'art antérieur et commenté plus haut ;
La figure 2 est une vue simplifiée en perspective et en contre plongée de la face inférieure de l'embout inférieur de l'assemblage de la figure 1 ;
La figure 3 est un logigramme destiné à illustrer la mise en oeuvre du procédé selon l'invention ;
La figure 4 est une vue de face et schématique d'un écran d'interface homme-machine servant à la mise en oeuvre de l'invention, et plus particulièrement destinée à illustrer la manière dont sont présentées les informations visibles sur cet écran.

### DESCRIPTION DETAILLEE DE L'INVENTION

La présente invention se rapporte essentiellement à un procédé de détection des corps migrants CM sur la grille anti-débris 16 d'un embout inférieur 11 d'un assemblage combustible 1, qui est mis en oeuvre par un programme qui traite des données issues d'images d'inspection télévisuelles (ci-après ITV).

Globalement, ce procédé permet d'analyser en temps réel et/ou en temps différé, le flux vidéo d'une caméra qui est pilotée en direction de l'assemblage combustible 1 pour y détecter des corps migrants CM et les présenter aux opérateurs en charge de différentes façons.

Le procédé peut être appliqué à chacune des étapes d'inspection. Par l'expression « une caméra pilotée en direction », on entend que ladite caméra est fixe et qu'elle zoome et met en oeuvre des rotations dirigées vers l'assemblage.

Dans le cas de l'utilisation en temps réel par l'opérateur qui manipule la caméra, le procédé génère une « alerte », notamment visuelle sur le flux vidéo en utilisant un algorithme de détection afin de signifier qu'il a détecté « quelque chose » à « tel endroit », de sorte que l'opérateur y porte son attention et décide éventuellement d'aller examiner cette zone plus spécifiquement. Il est également possible de générer un autre type d'alerte, tel qu'une alerte sonore.

Il peut permettre également la génération automatique d'un rapport d'inspection.

À la sortie de cette étape, on dispose alors de la vidéo brute d'inspection, d'un fichier qui rassemble les détections effectuées par l'algorithme, et du rapport d'inspection de l'opérateur.

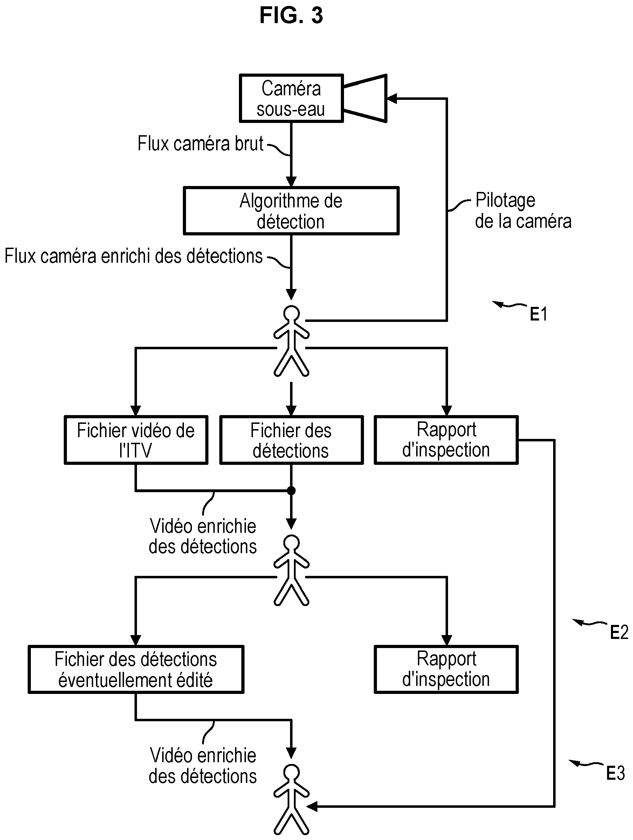

Cela correspond à l'étape E1 représentée à la figure 3 annexée.

Dans le cas d'utilisations en temps différé, par exemple à destination d'une seconde étape immédiate (aussitôt que le premier opérateur a terminé son inspection) d'inspection indépendante par un second opérateur, comme c'est le cas dans plusieurs centrales nucléaires, et à destination de la dernière étape de réexamen des vidéos pour le lever de doute et la décision d'intervenir ou pas pour retirer le CM, le fichier vidéo de l'inspection accompagné du fichier des détections générés à l'étape précédente sont fournis et sont utilisés par le procédé pour présenter les mêmes assistances qu'au premier opérateur, mais en indiquant en plus, dans la barre de progression temporelle de la vidéo, les instants auxquels des corps migrants sont suspectés d'être présents par le programme. Cela correspond à l'étape E2 de la figure 3.

Enfin, un troisième et dernier opérateur, chargé d'un dernier visionnage avec pour support les rapports des deux premiers opérateurs, et avec pour objectif de décider des actions à mener, pourra également bénéficier des détections de l'algorithme dans sa revue, notamment de la fonctionnalité qui permet de se rendre directement aux instants de la vidéo où le corps migrant est vu. Ceci correspond à l'étape E3 de la figure 3.

La « levée de doute » par ce dernier opérateur est sur le chemin critique de l'arrêt de tranche. Le chemin critique est l'entrée dans un rétrocalendrier compté à partir d'une date préalablement fixée d'un événement futur - par exemple la divergence du réacteur- de sorte que tout retard antérieur à cet événement conduira à son décalage dans le temps, avec des conséquences pénalisantes pour l'exploitation (défaut de production, etc.).

Il ressort de ce qui précède que le présent procédé permet ainsi de réduire considérablement le temps d'analyse par vidéo. En effet, une prise d'images vidéo pour un assemblage 1 dure en moyenne 3 minutes (plus précisément entre 2 et 5 minutes), à multiplier par 157 à 205 assemblages (environ 8h pour un arrêt de tranche).

En outre, le présent procédé permet aux opérateurs de se concentrer directement sur les sections de la vidéo où des corps migrants CM sont suspectés, sans avoir à parcourir la totalité de la vidéo pour les rechercher.

### ALGORITHME

Le procédé selon l'invention est basé sur un algorithme de reconnaissance d'images et de détection de corps migrants CM qui peut être constitué d'une version de « Yolov3 » (algorithme de détection de type réseau de neurones convolutionnel), qui est entraîné sur une base d'apprentissage spécifique constituée à partir d'archives de vidéos de corps migrants.

La base d'apprentissage est créée de façon itérative et en suivant une méthodologie spécifique permettant de minimiser l'effort de labellisation humaine.

Ainsi, par exemple, la base peut être enrichie à chaque fois que le défaut de présence d'au moins un corps migrant CM a été validée par le deuxième et /ou le troisième opérateur (en d'autres termes quand l'opérateur a validé qu'il s'agissait d'un « faux positif »), et à chaque fois qu'un CM n'a pas été détecté automatiquement. De cette façon, l'algorithme apprend en quelque sorte à partir de ses erreurs. Il est toutefois également possible d'enrichir la base à chaque fois que la présence d'un corps migrant est validée.

Certaines modifications peuvent être apportées à l'algorithme pour tirer parti des spécificités des images de vidéo d'assemblages combustibles par rapport à des images naturelles, notamment au niveau des transformations géométriques de l'augmentation de données qui inclut des symétries haut-bas, des symétries gauche-droite, des changements d'échelle isotropes (contraction/étirement) et des rotations de 90°, 180° et 270°.

L'augmentation de données de base de Yolov3 n'utilise qu'un miroir gauche/ droite, des changements d'échelle (contractions/étirements) anisotropes et pas de rotations.

En entrée du réseau de neurones, on fournit une image de dimension 416x416 pixels², et si l'image est de dimension différente, il faut la redi mensionner.

En sortie, on récupère une liste de détections.

Avantageusement, chaque détection est caractérisée par une position (sous la forme des quatre coordonnées d'une boite englobante « axis aligned » encadrant la détection) et un niveau de confiance (nombre réel entre 0,10 et 1,00) qui traduit comment l'algorithme estime la fiabilité de la détection.

Généralement, plus ce nombre est élevé, plus la probabilité qu'il s'agisse d'un vrai positif (c'est-à-dire d'une véritable détection) est élevée.

### OUTIL DE LECTURE VIDÉO INTÉGRANT OU S'INTERFAÇANT AVEC L'ALGORITHME DE DÉTECTION

L'interface homme-machine proposée aux opérateurs pour les assister dans la tâche de recherche des CM lors des ITV peut prendre la forme d'un lecteur vidéo dans lequel les propositions de l'algorithme de détection sont présentées.

Ce lecteur vidéo peut, par exemple, posséder trois modes de fonctionnement différents possibles dans son lien avec l'algorithme de détection (ce choix configurable via un fichier de configuration) :
A. L'algorithme de détection peut être embarqué dans le lecteur vidéo. Dans ce cas, le réseau de neurones de détection est fourni à l'outil sous la forme d'un fichier au format « ONNX » (exploité via « ML.Net », c'est-à-dire le « framework » (en français « cadre ») de « machine learning open source » (en français « apprentissage automatique en source ouverte ») de la Société Microsoft), et le fichier de configuration de l'outil référence ce fichier.

Dans cette configuration, l'outil de lecture vidéo « nourrit » le réseau de neurones avec les images successives de la vidéo (ou du flux issu de la caméra), en les redimensionnant en 416x416, et récupère les détections pour les afficher.

B. L'algorithme de détection peut être distant et tourner dans/sur un serveur.

Dans ce cas, le fichier de configuration de l'outil référence le serveur auquel il doit se connecter. Dans cette configuration, l'outil de lecture vidéo envoie les images successives au serveur, et récupère les détections pour les afficher.

C. L'outil peut être utilisé en simple relecture de détections déjà faites auparavant, auquel cas il lit en entrée le « fichier de détections » au format texte qui liste toutes les détections associées à la vidéo pour les afficher.

L'association entre la vidéo et le fichier de détection associé à ouvrir est automatique et se fait par le nom. Quand on ouvre une vidéo, si un fichier texte portant le même nom que la vidéo (mais au format « .txt ») est présent, alors l'outil laisse le choix entre utiliser ce fichier existant ou refaire une session de détection.

Les détections de l'algorithme peuvent être présentées à l'utilisateur de deux façons, à deux endroits, par exemple :
1. sur l'image de la vidéo de grille 16 d'assemblage combustible 1 : un carré entoure chaque détection, accompagné de la mention « corps migrant » CM et une alerte sonore signale la détection ;
2. sur la barre de progression temporelle de la vidéo, chaque détection est marquée par une barre verticale, à l'endroit de la barre de progression temporelle qui correspond à l'instant de la détection dans la vidéo, afin de repérer facilement les détections pour pouvoir s'y rendre, notamment les moments/intervalles dans lesquels les détections sont concentrées.

Dans les modes A et B précités, quand l'algorithme de détection a terminé de traiter une vidéo (ou un session caméra), il propose d'archiver la liste des détections via un fichier texte, nommé de façon identique à la vidéo, et placé au même endroit (même répertoire). Dans le cas où il existait déjà un tel fichier, l'ancien est sauvegardé et indicé dans un sous répertoire « backup » (en français « sauvegarde »).

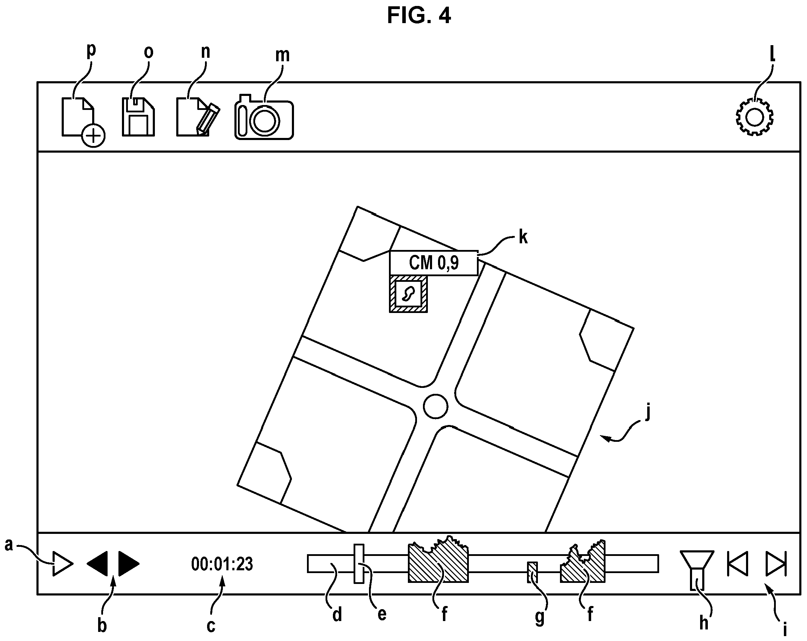

La figure 4 montre la façon dont les suspicions de corps migrants CM peuvent être présentées aux opérateurs, sur un écran d'ordinateur.

Un certain nombre d'éléments d'interface, visibles sur la figure 1, facilitent la recherche et l'analyse des corps migrants.

Ces éléments d'interface sont les suivants :
a. Bouton « play/pause » (en français « lecture/pause »).
b. Boutons permettant d'avancer dans la vidéo ou de reculer d'une durée déterminée. La durée en question est indiquée dans le fichier de configuration.
c. Indicateur de temps dans la vidéo (le temps courant et le temps total sont affichés dans le cas où on est en relecture d'une vidéo, mais seul le temps courant est affiché en mode direct connecté à la caméra).
d. Barre de progression temporelle avec, à sa droite, un facteur multiplicateur de vitesse permettant de passer la vidéo en accéléré.
e. Indicateur de position temporelle dans la vidéo, qui peut être manipulé.
f. Groupes de détections (une détection = une barre verticale, un groupe de barres contiguës = un groupe de détections).
g. Une détection isolée (aspect typique d'un » faux positif »).
h. Filtre qui permet de filtrer les positions à afficher en fonction de leur niveau de confiance.
i. Navigation de groupe de détections en groupe de détections.
j. Zone d'affichage de la vidéo.
k. Indication de détection de corps migrant CM par le procédé, sous la forme d'un « rectangle englobant » + mention « CM » + niveau de confiance de la détection.
l. Accès aux paramètres (pour remplir le fichier de configuration).
m. Demande de capture (pour ajout au rapport d'ITV).
n. Ouverture du rapport d'ITV.
o. Sauvegarde des détections après édition par l'utilisateur (qui peut ajouter/supprimer des détections).
p. Ouverture soit d'un fichier pour revisionnage, soit du flux de la caméra.

Le concept de « groupe de détections », mentionné plus haut est explicité ci-après.

Dans la vidéo, les instants où un corps migrant est visible à l'écran se regroupent généralement par blocs (par exemple le CM est visible de t=10,2 s à t=15,04 s puis plus du tout, puis de t=121 s à t=125.3 s).

Dans la barre de progression temporelle d, chaque détection est associée à une barre verticale dont la hauteur correspond à l'indice de confiance de la détection.

Un « groupe de détections » apparait donc comme un ensemble de telles barres jointives, donc comme un objet unique.

Les flèches gauche et droite i permettent de naviguer directement de groupe de détections en groupe de détections.

Dans le fichier de configuration, deux paramètres liés à ce concept sont avantageusement renseignés :
1. Le nombre minimal de détections pour qu'on considère un « groupe de détections » (c'est un moyen de filtrer les détections isolées, qui sont la plupart du temps des faux positifs) ;
2. Un seuil de tolérance aux non-détections, sous la forme d'un nombre d'images contiguës « sans détection » tolérable (qui vaut par défaut deux, c'est-à-dire que l'on ne doit changer de groupe que si on a trois images contiguës ou plus sans détection).

Un groupe de détections est donc une « même détection » (c'est-à-dire a priori d'un même objet), mais qui dure dans le temps. La navigation de l'un à l'autre permet la visualisation très rapide, pour une vidéo, des différents « candidats corps migrants ».

L'intérêt de l'affichage des barres verticales de détection dans la barre de progression temporelle est que cette représentation visuelle prend des aspects très différents en cas de présence de corps migrants (groupes contigus de détections de niveau moyen de confiance élevé) ou en cas de présence de faux positifs (détections isolées le plus souvent de faible niveau de confiance).

Avec l'habitude, la simple visualisation de la barre de progression temporelle équipées de ces barres permet d'avoir une bonne idée sur le fait que la vidéo contient un corps migrant ou sur le fait que les détections affichées seront vraisemblablement des faux-positifs.

Le filtrage des détections permet de supprimer la présentation des détections dont le niveau de confiance associé est inférieur à la valeur du filtre. Le niveau peut être ainsi adapté à chaque vidéo indépendamment. Il permet de supprimer des faux positifs, et de visualiser en temps réel, la façon dont cela modifie l'aspect de la barre de progression temporelle d équipée des barres verticales associées aux détections f et g.

La génération d'un rapport, via les boutons m et n, permet à l'opérateur de prendre des captures d'écrans n à différents instants clés, puis de générer un rapport m. Ce rapport liste ainsi les détections « valables » d'après l'opérateur (moments dans la vidéo + capture d'écran).

Il pourra être transmis pour assister l'étape finale de levée de doute et pourra servir pour archivage.

### AUTRES FONCTIONNALITES QUI PERMETTENT D'AUGMENTER L'EFFICACITE DU PROCEDE

La vidéo peut être passée en accéléré. Dans ce mode, la vidéo ralentit pour revenir à la vitesse normale dans les zones où l'algorithme a fait des détections.

Pour assurer le temps réel sur des machines qui n'auraient pas suffisamment de puissance, l'outil n'envoie pas toutes les images de la vidéo (ou du flux caméra) dans l'algorithme de détection mais seulement un certain ratio, à, savoir celui qui permet de conserver le temps réel.

Dans le cas où on traite un fichier vidéo (et non pas un flux caméra), on peut se déplacer dans la vidéo pendant le traitement, et le traitement sautera directement à l'instant en cours.

Si on fait cela plusieurs fois, on aura dans la vidéo des parties déjà traitées et des parties qui ne le sont pas encore, à différents endroits de la vidéo. Pour montrer cet état à l'utilisateur, la barre de progression temporelle est colorée en vert (ou autre couleur au choix) pour les instants qui ont été traités par l'algorithme, et reste blanche (ou autre couleur) pour les instants restant à traiter.

La progression de la zone verte est visualisée en temps réel (de la même façon que des vidéos en ligne, qui montrent à l'utilisateur les zones de la vidéo qui ont été chargées et celles qui ne le sont pas encore).

Deux modes différents pour redimensionner la vidéo au format 416x416 que prend le réseau en entrée peuvent être proposés.

Ces vidéos sont au format rectangulaire en mode paysage (largeur>hauteur), mais comportent pour certaines des bandes noires verticales à gauche et à droite, la zone d'intérêt centrale étant presque carrée.

L'utilisateur a donc le choix, pour réduire l'image en 416x416 de réduire la vidéo de façon à ce qu'on en prélève juste le carré central, que l'on réduit ensuite en 416x416, ou de faire entrer toute la vidéo dans un carré de 416x416 (la longueur est réduite à 416, et la largeur est réduite du même facteur). Ce choix entre les deux modes de réduction est renseigné dans le fichier de configuration via le bouton paramètres l.

Enfin pour l'analyse accélérée d'une campagne archivée ou d'un dossier comprenant de nombreuses vidéos, il est possible de proposer un traitement « par lots » qui génère pour chaque vidéo, en plus des fichiers de détection, une image « signature » qui devrait permettre de voir rapidement et en priorité les vidéos qui comportent des corps migrants.

Le principe est le suivant.

Pour chaque vidéo, une fois son traitement algorithmique terminé, l'outil vidéo se place au moment de la meilleure détection (en termes de niveau de confiance) du plus grand groupe de détection continue (quand il y a des groupes de détection), puis prend une capture d'écran. Cette capture d'écran est nommée comme la vidéo, avec en préfixe un compteur à 6 digits, au format 000000_, qui compte le nombre total de détection dans cette vidéo.

Toutes les captures d'écran ainsi générées sont placées dans un même répertoire. Ensuite, pour visionner le résultat, il suffit de classer ces fichiers images dans l'ordre alphabétique inverse (dans l'explorateur de fichier « Windows » (marque déposée)), puis de les parcourir en mode diaporama.

Ce sont les vidéos avec le plus de détections qui apparaîtront en premier dans cette séquence. Une seconde de visualisation par l'opérateur suffit par capture d'écran, car sur cette capture d'écran on peut voir à la fois le corps migrant suspecté encadré, et l'aspect de la barre de progression temporelle équipée des indicateurs de détection.

Cette image permet le plus souvent de capter un instant où le CM est présent (s'il s'agit d'une vidéo qui présente un vrai CM), et dans le cas où l'instant capté ne montre pas de CM, l'aspect de la barre de progression temporelle donne une très bonne idée de la présence de CM dans la vidéo.

C'est en appliquant cette dernière fonctionnalité qu'il a été possible, en moins d'une minute de traitement humain (visualisation de ces images dans l'ordre alphabétique inverse), de détecter deux corps migrants (sur deux vidéos différentes) qui n'avaient été détectés par aucun des trois opérateurs lors d'une précédente campagne d'ITV.

### CARACTÉRISATION DES PERFORMANCES :

Les cas de non-détection sont explicables. Il s'agit de nouveaux types de CM, sur lequel l'algorithme n'avait pas été entraîné.

Il suffit donc de réentraîner l'algorithme avec ces entrées pour améliorer les performances. Ainsi le taux de détections sur les types de CM déjà vus par l'algorithme approche les 100%.

Les faux positifs sont très peu nombreux (certaines vidéos entières ne présentent pas une seule détection, sur trois minutes de vidéo, soit 4500 images).

Le taux de faux positif moyen « par image », mesuré sur un jeu de test de référence, est de l'ordre de 2%. Ce qui signifie que sur une minute de vidéo (1500 images), il y aura 30 fausses détections « ponctuelles » (c'est-à-dire qui flashent pendant un 25ème de seconde). Sur une campagne complète de test, plus de la moitié des vidéos de 3 minutes comportent moins de 15 fausses détections (moins de 0,3% de faux positifs). De plus, quand un faux positif apparait dans une vidéo, il est le plus souvent très ponctuel. Généralement, il apparait comme un flash isolé de 1/25ème de seconde et n'attire pas l'attention.

Il y a cependant plusieurs pistes pour diminuer encore fortement ces faux positifs. La première est le filtrage des détections isolées (à un endroit de l'assemblage où il n'y a pas ou trop peu d'autres détections dans la vidéo).

On peut également éliminer les faux positifs « typiques » qui apparaissent à cause de nouveaux éléments qui ressemblent à des CM mais n'en sont pas (comme des crayons localement très éclaircis, ou certains reflets d'eau) grâce à un réentrainement les incluant.

### VARIANTES DE REALISATION

### MODE IMAGE :

Il est possible de proposer un mode dans lequel on peut également traiter des images en plus des vidéos.

Dans ce mode, on peut soit ouvrir une image seule pour analyse immédiate (ou faire glisser-déposer l'image depuis l'explorateur « Windows » (marque déposée) vers la fenêtre de l'outil), soit indiquer un répertoire contenant plusieurs images.

Dans le cas d'une image seule, les outils de navigation temporelle et la barre de progression temporelle n'ont plus d'intérêt.

Dans le cas d'un répertoire d'images, ces éléments sont recyclés. Les flèches de navigation b permettent de se déplacer d'image en image, comme dans un diaporama, et les flèches de navigation i, qui permettaient de se déplacer de groupe de détection en groupe de détection, permettent ici de se déplacer d'une image comportant une détection à une autre image comportant une détection.

L'affichage des barres verticales f et g illustrant les détections est conservé et le filtre h est également fonctionnel.

### SUIVI DES VIS EN TANT QUE REPÈRES :

L'embout inférieur 11 d'assemblage combustible 1 comporte généralement vingt-quatre vis très caractéristiques qui sont placées au même endroit, quel que soit le fournisseur de l'assemblage.

Ces vis constituent des repères faciles à détecter avec l'algorithme déjà existant (en effet, il suffit d'apprendre à l'algorithme à détecter les vis en plus des CM). Leurs écarts et positions respectives étant connus, les vis permettent, pour un coût algorithmique très faible, de faire de l'estimation de pose de l'assemblage combustible 1 (évaluation précise de la position/orientation, à chaque instant, de l'assemblage combustible par rapport à la caméra).

Le suivi des vis permet ainsi la constitution d'un repère relatif à l'assemblage 1 dans lequel il devient possible de faire de la cartographie et de la métrologie des CM.

On peut donner ainsi :
1. Une estimation de la dimension du CM.
2. Une estimation de la couverture de la grille d'assemblage anti-débris 16, lors de l'ITV (par estimation des zones visualisées), car sur certaines vidéos d'archives, on constate que certaines zones sont traitées très rapidement voire oubliées.
3. Déterminer le début et la fin de l'analyse de la grille anti-débris 16 dans une vidéo d'ITV (qui parfois comprend d'autres sections que juste la phase d'examen de la grille anti-débris).
4. Connaître la position précise de chaque détection sur la grille d'assemblage anti-débris 16.

La fonctionnalité 2 précitée entraine à son tour plusieurs possibilités intéressantes :
1. Une éventuelle automatisation quasi complète qui, à une vidéo associe une vue schématique de la grille d'assemblage sur laquelle on montre, le cas échéant, l'emplacement du (ou des) CM(s) détecté(s) un grand nombre de fois (paramètre à spécifier), ainsi qu'une image de chaque CM.
2.L'élimination de faux positifs de type reflet ou lié à un effet de perspective (qui vont, à un certain moment, être vus à un endroit de la grille mais qui ne seront plus vus quand le même endroit de la grille sera regardé sous un autre angle de vue, ultérieurement).

Pour cela, il suffit de donner, pour chaque détection, son « taux de visibilité » lorsque la zone correspondante est à l'écran (un CM devrait avoir un tel taux très élevé, et un faux positif un taux faible).
3. Le comptage des détections « différentes » (au sens de leur localisation sur la grille), et la possibilité de les différencier, via une couleur différente pour chaque « objet » différent dans leur représentation, aussi bien sur la vidéo que dans la barre de progression temporelle, ainsi que via des « coches » dans l'interface permettant de masquer ou afficher chaque détection.
4. Avoir une référence de la position pour l'opération de retrait du CM.
5. Avoir une référence de la position du CM pour la recherche/confrontation sur des ITV antérieures du même assemblage (pour vérifier si le CM était déjà là).

### AUTOMATISATION DE L'ITV :

Dans une version encore plus prospective de l'outil, une intelligence artificielle (sur base des mêmes vidéos d'archives) pourrait apprendre à manipuler elle-même la caméra pour faire la recherche de corps migrant en capturant elle-même les vidéos et décidant par exemple elle-même de venir examiner de plus près ses suspicions de CM.

### APPLICATIONS /AVANTAGES UTILISATEURS :

Le procédé selon l'invention peut être mis en oeuvre dans chacune des 3 étapes de détection des CM.

Ainsi, l'outil peut être proposé à chacun des trois opérateurs ou seulement à un sous-ensemble. Ainsi, par exemple, on pourrait ne pas le donner qu'à l'opérateur qui fait l'inspection en direct, mais juste aux « relecteurs », afin de ne pas risquer une baisse de vigilance paradoxalement due à l'assistance).

Dans une version où les trois étapes sont mises en oeuvre via le procédé selon l'invention, l'assistance peut être utilisée dès la première étape lors de la prise d'image initiale, c'est-à-dire « en direct » (donc soit avec une machine suffisamment puissante pour utiliser le mode A décrit plus haut, soit l'utilisation du mode B décrit plus haut).

L'opérateur peut générer son rapport automatiquement (avec les captures d'écran qu'il estime intéressantes) via la fonctionnalité idoine. Il peut fournir ensuite la vidéo et le fichier de détection généré comme entrée de la seconde étape, pour une analyse indépendante (ce qui signifie qu'il ne fournit pas le rapport).

Lors de cette seconde étape d'analyse indépendante, l'outil peut être utilisé en mode C (pas de détection via l'algorithme, mais simple relecture du fichier de détection préalablement généré) et l'opérateur peut générer également son rapport automatiquement. Il aura également la possibilité d'éditer le fichier de détections et pourra supprimer des détections, en les sélectionnant à l'écran individuellement ou en sélectionnant un intervalle dans la barre temporelle.

Il pourra également en ajouter à la main, via la fonction ajout manuel (il met la vidéo en pause et dessine le carré à l'écran).

Enfin, la vidéo, le fichier de détection éventuellement enrichi par l'édition de celui-ci lors de la seconde étape, et les deux rapports générés sont remis à l'opérateur chargé de la revue finale et de la levée de doute en cas de suspicion de CM.

La levée de doute en cas d'une suspicion de CM est sur le chemin critique de l'arrêt de tranche, de sorte que tout gain de temps à cette étape est un gain monétaire direct.

Un assemblage combustible coûte très cher et la non-détection d'un corps migrant peut l'endommager et le rendre inutilisable.

Un corps migrant peut éventuellement via divers moyens, provoquer un perçage de la gaine d'un crayon et provoquer une perte de la première barrière de sécurité, avec diffusion des produits de fission dans le circuit primaire.

Sur les vidéos archivées issues de différents sites, les corps migrants manqués par la méthode selon l'état de la technique actuelle mettant en oeuvre trois opérateurs ont pu être détectés par le procédé selon l'invention qui indiquait directement à quels moments de la vidéo regarder ce qui, d'une part accroît la fiabilité de la recherche de CM et, d'autre part, limite grandement la durée du visionnage des opérateurs, notamment pour le dernier opérateur dans son rôle de lever de doute.

La solution selon l'invention permet de lever en partie les inconvénients associés à la fatigue humaine face à une telle tâche, qui entraine fatalement des oublis.

## Revendications

1. Procédé d'aide à la détection de corps migrants (CM) au sein d'un assemblage combustible (1) d'une centrale nucléaire et plus particulièrement sur la grille anti-débris (16) de l'embout inférieur (11) dudit assemblage (1), au cours duquel on pilote au moins une caméra en direction dudit assemblage (1) et on dirige le flux d'images enregistré par ladite au moins une caméra vers une interface homme machine qui comprend au moins un écran permettant à un premier opérateur de visualiser ledit flux d'images vidéos, **caractérisé en ce qu'**il comprend une première étape de détection, à l'aide d'un algorithme de reconnaissance d'images, desdits corps migrants (CM), ainsi qu'à minima une deuxième étape d'alerte dudit opérateur si ledit algorithme a détecté la présence potentielle d'au moins un corps migrant (CM).

2. Procédé selon la revendication 1, **caractérisé par le fait que** ladite deuxième étape d'alerte comprend le déclenchement d'une alerte sonore et/ou d'une alerte visuelle sur ledit écran, de l'endroit où est potentiellement placé ledit corps migrant (CM) et/ou la génération automatique d'un rapport d'inspection.

3. Procédé selon la revendication 2, **caractérisé par le fait que**, lorsque ledit algorithme a détecté la présence potentielle d'au moins un corps migrant (CM), on stocke le fichier vidéo correspondant ainsi que le (les) fichier(s) de détection(s) effectuée(s) par ledit algorithme et on l'(les) adresse à un deuxième opérateur avec une indication temporelle, dans ledit fichier vidéo, de l'(ou des) instant(s) au(x)quel(s) un (des) corps migrant(s) (CM) a (ont) été potentiellement détecté(s), ce deuxième opérateur validant la présence ou le défaut de présence d'au moins un corps migrant (CM).

4. Procédé selon la revendication 3, **caractérisé par le fait que** ledit (lesdits) fichiers de détection sont transmis à un troisième opérateur qui valide, de manière définitive, la présence ou le défaut de présence d'au moins un corps migrant (CM).

5. Procédé selon l'une des revendications 3 ou 4, **caractérisé par le fait qu'**il comprend une étape d'apprentissage automatique de détection de corps migrants (CM) lorsque le deuxième opérateur, respectivement le troisième opérateur a validé le défaut de présence d'un corps migrant (CM).

6. Procédé selon la revendication 3 à 5, **caractérisé par le fait que** l'on fait usage d'un logiciel de reconnaissance d'image de type « réseau de neurones convolutionnel », qui est entraîné sur une base d'apprentissage constituée d'archives de vidéos de corps migrants (CM), laquelle base est potentiellement enrichie à chaque fois que ledit logiciel de reconnaissance commet une erreur de détection tel un « faux positif » ou un « faux négatif » , cette erreur ayant été validée par le deuxième et /ou le troisième opérateur.

7. Procédé selon la revendication 3, **caractérisé par le fait que** ladite indication temporelle a la forme d'au moins une barre affichée sur la ligne de progression temporelle de la vidéo.
